Europäisches Patentamt

(19) European Patent Office

Office européen des brevets

(11) Numéro de publication: **0 077 233**
A1

# (12) DEMANDE DE BREVET EUROPEEN

(21) Numéro de dépôt: 82401727.1

(22) Date de dépôt: 24.09.82

(51) Int. Cl.³: **B 01 F 17/00,** C 09 B 67/00,
A 01 N 25/14

---

(30) Priorité: 06.10.81 FR 8118772

(43) Date de publication de la demande: 20.04.83
Bulletin 83/16

(84) Etats contractants désignés: BE CH DE FR GB IT LI NL

(71) Demandeur: **P C U K PRODUITS CHIMIQUES UGINE
KUHLMANN, Service Propriété Industrielle Tour
Manhattan, F-92087 Paris La Défense 2 Cédex 21 (FR)**

(72) Inventeur: **Delescluse, Charles Léon Louis, "La
Malbroue" 10, rue de Saint Maximin, F-60305 Apremont
(FR)**

(74) Mandataire: **Leboulenger, Jean et al, P C U K PRODUITS
CHIMIQUES UGINE KUHLMANN Service Propriéte
Industrielle Tour Manhattan, F-92087 Paris La
Défense 2 Cedex 21 (FR)**

---

(54) Poudres mouillables de substances solides hydrophobes, leur préparation et adjuvants mouillants-dispersants et non moussants utilisables à cet effet.

(57) L'invention concerne la présentation de substances solides hydrophobes sous forme de poudres mouillables.

Les poudres mouillables selon l'invention contiennent, en mélange avec une ou plusieurs substances solides hydrophobes,

a) au moins un agent dispersant choisi parmi les lignosulfonates et les condensats du type acide naphtalènesulfonique-formaldéhyde, et

b) au moins un agent tensio-actif choisi parmi les esters phosphoriques, salifiés ou non, d'un alcool aliphatique en $C_2$ à $C_{10}$ ramifié ou non, la quantité totale d'agent(s) dispersant(s) et d'agent(s) tensio-actif(s) étant comprise entre 1 et 6 parties en poids pour 100 parties en poids de substances solides hydrophobes et la proportion d'agent(s) dispersant(s) dans cette quantité totale pouvant aller de 35 à 85% en poids.

Ces poudres présentent d'excellentes propriétés de mouillabilité et de dispersibilité dans l'eau et un trè faible pouvoir moussant.

## Poudres mouillables de substances solides hydrophobes, leur préparation et adjuvants mouillants-dispersants et non moussants utilisables à cet effet

La présente invention, réalisée dans les services de la demanderesse, concerne la présentation de substances solides hydrophobes sous forme de poudres mouillables.

Pour faciliter l'emploi de substances solides hydrophobes (notamment matières colorantes et produits phytosanitaires tels qu'herbicides, insecticides et fongicides ou leurs mélanges avec des charges inertes comme les argiles et la bentonite), on s'efforce de les présenter sous forme de poudres mouillables, c'est-à-dire de poudres dont les particules se mouillent facilement et rapidement dans l'eau et s'y maintiennent en suspension. Ces poudres résultent généralement de l'association desdites substances solides hydrophobes avec des agents mouillants, des dispersants et des agents anti-mousse, ces derniers ayant pour but d'éviter la formation de mousses toujours gênantes aussi bien lors de la préparation des poudres mouillables qu'au moment de leur emploi dans les dispositifs de dilution et de pompage et dans les appareils d'épandange ou de pulvérisation. L'utilisation d'agents anti-mousse s'avère toujours délicate soit en raison d'une incompatibilité toujours possible avec le milieu dans lequel ils sont à mettre en oeuvre, soit en raison de leur rôle éphémère compte-tenu de leur "digestion" possible au sein du milieu, cette "digestion" amoindrissant leur efficacité dans le temps.

Il existe d'excellents agents dispersants non moussants. Ils ne permettent pas cependant d'abaisser suffisamment la tension superficielle de l'eau et, par suite, ne peuvent pas contribuer à l'étalement rapide de l'eau à la surface des substances solides hydrophobes. Il est donc généralement nécessaire, lors de la formulation de poudres mouillables, de leur associer des agents tensio-actifs ou abaisseurs de tension superficielle de façon à favoriser la mouillabilité des substances hydrophobes. Malheureusement, de nombreux agents tensio-actifs doivent être écartés en raison de leur pouvoir moussant trop élevé ou être utilisés en présence d'agents anti-mousse.

Dans le brevet U.S. n° 3 737 551 sont déjà décrites des poudres mouillables dans lesquelles une substance solide hydrophobe est associée, d'une part, à un agent dispersant choisi parmi les lignosulfonates et les condensats du type acide naphtalènesulfonique-formaldéhyde et, d'autre part, à un agent mouillant tel qu'un sel alcalin d'alkylsulfonate en $C_8$ à $C_{18}$ (par exemple laurylsulfate de sodium) ou un alkylphénol éthoxylé. Cependant, la dispersibilité de ces poudres mouillables est relativement faible et leur pouvoir moussant est souvent très élevé.

Il a maintenant été trouvé qu'on peut préparer des poudres possédant d'excellentes propriétés de mouillabilité et de dispersibilité dans l'eau et un très faible pouvoir moussant, en associant à la substance solide hydrophobe, d'une part, au moins un agent dispersant choisi parmi les lignosulfonates et les condensats du type acide naphtalènesulfonique-formaldéhyde et, d'autre part, au moins un agent tensio-actif choisi parmi les esters phosphoriques, salifiés ou non, d'un alcool aliphatique en $C_2$ à $C_{10}$ ramifié ou non. On a en effet constaté de façon inattendue que les poudres de ce type présentent des propriétés de mouillabilité supérieures à celles des poudres ne contenant que l'agent tensio-actif du type précité, tout en conservant des propriétés de dispersibilité équivalentes, voire supérieures, à celles de poudres ne contenant que l'agent dispersant du type précité. En outre, leur pouvoir moussant s'est révélé être souvent moindre que celui des poudres ne contenant que le dispersant ou l'agent tensio-actif.

La présente invention a donc pour objet les poudres mouillables de substances solides hydrophobes, caractérisées en ce qu'elles contiennent, en mélange avec ladite substance solide hydrophobe,

a) au moins un agent dispersant choisi parmi les lignosulfonates et les condensats du type acide naphtalènesulfonique-formaldéhyde, et

b) au moins un agent tensio-actif choisi parmi les esters phosphoriques, salifiés ou non, d'un alcool aliphatique en $C_2$ à $C_{10}$ ramifié ou non.

Parmi les condensats du type acide naphtalènesulfonique-formaldéhyde, on préfère ceux qu'on obtient en sulfonant le naphtalène à une température comprise entre 130 et 165°C avec un excès moléculaire de 20 à 30 % d'agent sulfonant, puis en condensant le produit sulfoné avec le formaldéhyde à raison de 0,55 à 0,90 mole (de préférence 0,65 à 0,70 mole) de formaldéhyde par mole de naphtalène engagé et enfin en salifiant les groupements sulfoniques du condensat à l'aide d'hydroxyde de sodium ou d'un autre agent de salification tel que la potasse, l'ammoniaque, la lithine, la magnésie, la chaux ou des amines comme, par exemple, la diéthanolamine et la triéthanolamine. Ces condensats possèdent en effet de remarquables propriétés d'agent de broyage, de désintégration d'agglomérats et de maintien en suspension de particules solides ; en outre, leurs propriétés moussantes sont très faibles.

L'agent tensio-actif (b) peut être un mono-, di- ou triester phosphorique ou un mélange de tels esters. Les esters acides peuvent être utilisés comme tels ou sous forme de leurs sels avec l'un des agents de salification précités.

Comme exemples d'alcools en $C_2$ à $C_{10}$, on peut citer plus particulièrement l'éthanol, l'alcool isopropylique, le butanol, l'alcool isobutylique, l'alcool amylique et surtout l'éthyl-2 hexanol.

Pour préparer une poudre mouillable selon l'invention, il suffit de mélanger la ou les substances solides hydrophobes à l'état de poudre finement divisée (de préférence 5 à 20 µm) avec, d'une part, le ou les agents dispersants et, d'autre part, le ou les agents tensio-actifs du type précité. Cependant, il est souvent plus commode d'utiliser un adjuvant homogène (solution ou poudre) obtenu par mélange préalable de solutions ou de poudres desdits agents dispersants et tensio-actifs ou encore par séchage ou atomisation du mélange de telles solutions. Dans ce dernier cas, pour obtenir un adjuvant homogène, il est préférable, si le dispersant est un condensat du type acide naphtalènesulfonique-formaldéhyde, d'utiliser un condensat exempt de sulfate, obtenu par exemple de façon classique par chaulage-carbonatation.

La quantité totale d'agents dispersants et tensio-actifs à utiliser peut varier dans de larges limites selon la nature des particules solides hydrophobes, la taille et l'état de division de ces dernières et la présence éventuelle de charges inertes. En général, il suffit que cette quantité totale soit comprise entre 1 et 6 parties en poids, de préférence entre 2 et 4 parties en poids, pour 100 parties en poids de substances solides.

La proportion d'agent(s) dispersant(s) par rapport au poids total d'agents dispersants et tensio-actifs peut aller de 35 à 85 % en poids. Quand le dispersant est un lignosulfonate, cette proportion est de préférence comprise entre 50 et 85 %. Quand le dispersant est un condensat du type acide naphtalènesulfonique-formaldéhyde, cette proportion est comprise de préférence entre 50 et 75 % et surtout entre 60 et 70 %.

Comme exemples de substances solides hydrophobes susceptibles d'être présentées sous forme de poudres mouillables conformes à l'invention, on peut citer plus particulièrement :

- les herbicides connus sous les désignations communes : Atrazine, Neburon, Chlortoluron, Terbutryne et Terbacil ;

- les fongicides connus sous les désignations communes : Captane, Thiram (ou TMTD), Carbendazim, Manèbe et Zinèbe, ainsi que le soufre ;

- les insecticides connus sous les désignations communes : Gamma-HCH (ou lindane) et Carbaryl.

Les exemples suivants dans lesquels les parties et les pourcentages indiqués s'entendent en poids, sauf mention contraire, illustrent l'invention sans la limiter.

EXEMPLE 1
a) Préparation du tensio-actif (sel de triéthanolamine de l'ester phosphorique de l'éthyl-2 hexanol).

Dans un réacteur d'une capacité de 2 500 parties en volume muni d'un agitateur, d'un thermomètre, d'un jaugeur et d'un réfrigérant ascendant, on introduit 525 parties d'éthyl-2 hexanol anhydre, puis on porte la température à 40°C et ajoute par le jaugeur 285 parties d'anhydride phosphorique ($P_2O_5$ anhydre). On élève ensuite progressivement la température jusqu'à 100°C en 8 heures et maintient cette température pendant 3 heures sous barbotage d'azote. Après refroidissement de la masse jusqu'à 25°C, on neutralise l'ester acide en ajoutant un mélange de 750 parties d'eau épurée et 650 parties de triéthanolamine. Après cette neutralisation qui conduit à un pH de 7,3, on ajoute encore 175 parties d'eau épurée.

Le produit obtenu (A) est un liquide jaune clair dont le taux de matières actives (mélange sensiblement équimoléculaire des mono- et diesters) est de 58 $\pm$ 0,5 %. La présence éventuelle dans le produit d'une faible proportion (0,5 à 2 %) d'éthyl-2 hexanol non estérifié n'est pas gênante.

b) Préparation du dispersant (condensat acide naphtalènesulfonique-formaldéhyde)

Dans un réacteur d'une capacité de 2 000 parties en volume équipé
d'un agitateur mécanique, d'un thermomètre, d'un jaugeur et d'un
réfrigérant ascendant, on introduit 100 parties de naphtalène.
Après avoir porté la température à 130°C on ajoute en 15 minutes
par le jaugeur 100 parties d'acide sulfurique à 100 % et chauffe
le mélange pendant une heure à 150°C.

Après refroidissement à 100°C, on dilue la masse avec 50 parties
d'eau, puis ajoute par le jaugeur 53 parties d'une solution de
formaldéhyde à 30 % en maintenant le reflux jusqu'à disparition
du formaldéhyde. Après dilution avec 200 parties d'eau, on procède à une opération de chaulage-carbonatation pour obtenir le
sel de sodium du condensat acide naphtalènesulfonique-formaldéhyde
sous forme d'une solution (produit B) ayant un pH de 6, un taux
d'extrait sec de 46 % et un taux de sulfate libre inférieur à 2 %.

c) Préparation d'une poudre mouillable de Captane

Le Captane, désignation commune approuvée par le BSI, l'ISO et
l'ACTA pour le N-(trichlorométhylthio) cyclohexène-4 dicarboxi-
mide-1,2 est un fongicide bien connu dans l'industrie phytosanitaire pour les difficultés que l'on a à le présenter sous forme
de poudre mouillable performante.

Sur 100 parties d'un Captane dont 90 à 95 % des particules ont
une dimension d'environ 5 µm, on fait absorber dans un mélangeurbroyeur 1,083 partie du produit A ci-dessus puis 2,978 parties
du produit B ci-dessus.

On obtient une poudre mouillable qui se disperse parfaitement
dans l'eau sans formation de mousses. Après 30 minutes de repos,
une dispersion aqueuse à 1 % de cette poudre contient encore en
suspension plus de 75 % des particules solides.

Au lieu de faire absorber successivement les produits A et B, on peut faire absorber directement leur mélange.

d) Evaluation des propriétés

Afin d'évaluer les propriétés de cette poudre mouillable, on a effectué les tests suivants :

* Pouvoir mouillant : 5 g de poudre mouillable sont exactement pesés, puis versés à la surface de 500 ml d'eau dure étalon (préparation suivant la norme française NF U.43402), contenue dans une éprouvette en verre graduée de même capacité. On mesure le temps (exprimé en secondes) mis par la poudre pour se mouiller complètement (absence de particules solides en surface).

* Dispersibilité : Dès que le test précédent est terminé ou au plus après 30 minutes, on bouche l'éprouvette contenant les mêmes ingrédients et la soumet à 30 renversements successifs à 2 secondes d'intervalle. La suspension obtenue est ensuite maintenue au repos à l'abri des vibrations (de préférence sur une table "anti-vibrations") pendant exactement 30 minutes. Par succion à mi-hauteur de l'éprouvette (graduation 250), on prélève alors 25 ml de suspension et les place dans une capsule pour déterminer l'extrait sec par séjour en étuve régulée à 80°C jusqu'à l'obtention d'un poids constant. Ce poids permet de calculer le pourcentage de matières solides restant en suspension après les 30 minutes de repos.

* Pouvoir moussant : On l'évalue en mesurant les hauteurs de mousse obtenue par application d'énergie mécanique sur 250 ml d'une dispersion aqueuse correspondant à 1g/l d'agent tensio-actif ; dans le présent exemple, cette teneur correspond à 40 g de poudre mouillable pour 250 ml de dispersion aqueuse. Ces 250 ml sont disposés dans une éprouvette graduée de 1 litre. L'énergie mécanique est fournie par un batteur constitué d'un disque métallique ou plastique perforé, communément utilisé pour l'évaluation du pouvoir moussant des agents tensio-actifs. On applique 20 battements

0077233

- 8 -

successifs à raison d'un battement toutes les 2 secondes, puis on mesure le volume de mousse, d'une part, aussitôt après le dernier battement et, d'autre part, après 1, 15 et 30 minutes de repos pour évaluer la stabilité des mousses.

A titre de comparaison, on a également testé les propriétés de poudres non conformes à l'invention, obtenues comme ci-dessus (c) mais avec l'un seulement des produits A et B ou avec un autre agent mouillant (dibutylnaphtalènesulfonate de sodium) ou avec une combinaison de ce dernier avec le produit B, la proportion d'adjuvant exprimés en matières actives par rapport au Captane restant toujours la même (2 %).

Le tableau I suivant rassemble les résultats obtenus.

TABLEAU I

| POUDRE N° | ADJUVANT | | POUVOIR MOUILLANT (en secondes) | DISPERSIBILITE % de matières en suspension après 30 min. | POUVOIR MOUSSANT Volume de mousse (en ml) | | | |
|---|---|---|---|---|---|---|---|---|
| | Nature | % | | | Temps 0 | Après 1 min | Après 15 min | Après 30 min |
| 1 | Dibutylnaphtalène-sulfonate de sodium | 2 | 25 | 20 | >750 débordement | >750 | 500 | 150 |
| 2 | Ester A | 2 | 135 | 8 | 280 | 50 | 0 | 0 |
| 3 | Condensat B | 2 | 540 | 80 | 40 | 30 | 0 | 0 |
| 4 | Ester A + Condensat B | 0,63 1,37 | 45 | 78 | 30 | 10 | 0 | 0 |
| 5 | Dibutylnaphtalène-sulfonate de sodium + Condensat B | 0,63 1,37 | 46 | 40 | >750 débordement | >750 | 300 | 140 |

- 10 -

En comparant les résultats obtenus avec les poudres 2, 3 et 4, on observe des effets de complémentarité et de synergie (pouvoir mouillant) lorsqu'on utilise comme adjuvant l'association de l'ester A et du condensat B (poudre n° 4). Par contre, l'association du dibutylnaphtalènesulfonate de sodium et du condensat B (poudre n° 5) ne procure pas ces mêmes effets.

EXEMPLE 2

On opère comme à l'exemple 1-c, mais on remplace le Captane par la même quantité (100 parties) de l'un des produits suivants :

a) Atrazine coupée avec 50 % d'argile et ayant la granulométrie suivante : 10 à 15 µm (80 %), 15 à 40 µm (20 %). Le nom Atrazine est la désignation commune pour un herbicide sélectif constitué par la chloro-2 éthylamino-4 isopropylamino-6 triazine-1,3,5.

b) Chlortoluron coupé avec 50 % d'argile et ayant la granulométrie suivante : 10 à 15 µm (70 %), 15 à 20 µm (20 %), plus de 20 µm (10 %). Chlortoluron est la désignation commune pour un herbicide constitué par la N-(chloro-3 méthyl-4 phényl) N,N-diméthyl urée.

c) Mélange de Lindane (60 %), de Manèbe (20 %) et de Zinèbe (20 %), coupé avec 50 % d'argile et ayant la granulométrie suivante : 5 à 10 µm (70 %), 10 à 15 µm (20 %), plus de 15 µm (10 %). Le Lindane est l'isomère gamma de l'hexachlorocyclohexane, le Manèbe l'éthylène-bis (dithiocarbamate) de manganèse polymère et le Zinèbe l'éthylène-bis (dithiocarbamate) de zinc polymère.

Les tableaux II-a, II-b et II-c suivants rassemblent les résultats obtenus en soumettant les poudres ainsi obtenues aux mêmes tests que précédemment.

L'examen de ces tableaux montre que les effets de complémentarité et de synergie déjà signalés à l'exemple 1 à propos de la poudre 4 se manifestent également pour les poudres 9,14 et 19 selon l'invention.

TABLEAU II-a (ATRAZINE)

| POUDRE N° | ADJUVANT | | POUVOIR MOUILLANT (en secondes) | DISPERSIBILITE % de matières en suspension après 30 min. | POUVOIR MOUSSANT Volume de mousse (en ml) | | | |
|---|---|---|---|---|---|---|---|---|
| | Nature | % | | | Temps 0 | Après 1 min | Après 15 min | Après 30 min |
| 6 | Dibutylnaphtalène-sulfonate de sodium | 2 | 330 | 25 | >750 débordement | >750 | >750 | 320 |
| 7 | Ester A | 2 | 435 | 18 | 430 | 310 | 30 | 10 |
| 8 | Condensat B | 2 | 450 | 82 | 360 | 280 | 20 | 10 |
| 9 | Ester A + Condensat B | 0,63 1,37 | 105 | 79 | 180 | 90 | 10 | 10 |
| 10 | Dibutylnaphtalène-sulfonate de sodium + Condensat B | 0,63 1,37 | 335 | 26 | >750 débordement | >750 | 720 | 280 |

## TABLEAU II-b (CHLORTOLURON)

| POUDRE N° | ADJUVANT Nature | % | POUVOIR MOUILLANT (en secondes) | DISPERSIBILITE % de matières en suspension après 30 min. | POUVOIR MOUSSANT Volume de mousse (en ml) Temps 0 | Après 1 min | Après 15 min | Après 30 min |
|---|---|---|---|---|---|---|---|---|
| 11 | Dibutylnaphtalène-sulfonate de sodium | 2 | 16 | 66 | >750 débordement | >750 | 740 | 460 |
| 12 | Ester A | 2 | 13 | 32 | 410 | 335 | 255 | 180 |
| 13 | Condensat B | 2 | >30 min | 55 | 380 | 310 | 235 | 175 |
| 14 | Ester A + Condensat B | 0,63 1,37 | 9 | 69 | 195 | 170 | 120 | 105 |
| 15 | Dibutylnaphtalène-sulfonate de sodium + Condensat B | 0,63 1,37 | 17 | 58 | >750 débordement | >750 | 720 | 390 |

0077233

## TABLEAU II-c

### Mélange LINDANE + MANEBE + ZINEBE

| POUDRE N° | ADJUVANT | | POUVOIR MOUILLANT (en secondes) | DISPERSIBILITE % de matières en suspension après 30 min. | POUVOIR MOUSSANT Volume de mousse (en ml) | | | |
|---|---|---|---|---|---|---|---|---|
| | Nature | % | | | Temps 0 | Après 1min | Après 15 min | Après 30 min |
| 16 | Dibutylnaphtalène-sulfonate de sodium | 2 | 330 | 95 | >750 débordement | >750 | 450 | 170 |
| 17 | Ester A | 2 | 450 | 28 | 235 | 70 | 0 | 0 |
| 18 | Condensat B | 2 | 620 | 90 | 50 | 35 | 0 | 0 |
| 19 | Ester A + Condensat B | 0,63 1,37 | 125 | 92 | 50 | 30 | 0 | 0 |
| 20 | Dibutylnaphtalène-sulfonate de sodium + Condensat B | 0,63 1,37 | 494 | 82 | >750 débordement | >750 | 280 | 180 |

- 13 -

0077233

- 14 -

EXEMPLE 3

Dans une cuve de dilution on mélange à température ambiante
250 parties du produit A décrit à l'exemple 1-a et 685 parties
du produit B décrit à l'exemple 1-b. Après atomisation du mélange,
on obtient un adjuvant selon l'invention qui se présente sous
forme d'une poudre homogène beige clair contenant 31,5 % de sel
de triéthanolamine de l'ester phosphorique d'éthyl-2 hexanol
(100 % de matières actives) et 68,5 % de sel de sodium du condensat acide naphtalènesulfonique-formaldéhyde (100 % de matières
actives).

Dans un broyeur BRAUN (vitesse n° 3) on incorpore 2 parties de
cet adjuvant homogène dans 100 parties de Captane par broyage et
homogénéisation à sec pendant 30 secondes. On obtient une poudre
mouillable dont les particules se mouillent en moins de 50 secondes et dont une dispersion aqueuse à 1 % contient encore en suspension, après 30 minutes de repos, plus de 75 % des particules
solides.

EXEMPLE 4

On opère comme à l'exemple 3, mais on utilise 4 parties d'adjuvant homogène pour 100 parties de Captane. On obtient une poudre
mouillable dont 5 g déposés à la surface d'une éprouvette contenant
500 ml d'eau se mouillent en 41 secondes. Une dispersion aqueuse
à 1 % de cette poudre est très stable : le pourcentage de matières
solides en suspension après 30 minutes de repos est de 82 %.

EXEMPLE 5

Dans un broyeur on mélange à sec pendant 30 secondes 100 parties
de Captane avec 3,425 parties d'un lignosulfonate de sodium et
1,086 partie du produit A décrit à l'exemple 1-a (58 % de matières
actives). On obtient une poudre mouillable dont les performances :

- Temps de mouillage de 5 g de poudre

  dans 500 ml d'eau ......................... 53 secondes
- Maintien en suspension d'une dispersion à

  1 % après 30 minutes de repos ............... 82 %

sont très supérieures à celles d'une poudre obtenue de la même façon avec 4,5 parties du même lignosulfonate pour 100 parties de Captane en l'absence d'agent tensio-actif :

- Temps de mouillage ................ supérieur à 30 minutes
- Maintien en suspension ............ 68 %

## EXEMPLE 6

En opérant comme aux exemples précédents, on prépare neuf poudres ayant la composition pondérale suivante :

. Captane ..................................... 97,45 %

. Condensat acide naphtalènesulfonique-

  formaldéhyde (100 % de matières actives)........ 1,79 %

. Tensio-actif mouillant (voir tableau) .......... 0,76 %

Les propriétés de ces poudres sont évaluées en opérant comme à l'exemple 1-d. Le tableau III suivant rassemble les résultats obtenus. Seules les poudres 21 et 22 conformes à la présente invention présentent simultanément de bonnes propriétés de mouillabilité et de dispersibilité dans l'eau et un très faible pouvoir moussant.

TABLEAU III

| POUDRE Nº | TENSIO-ACTIF | POUVOIR MOUILLANT (en secondes) | DISPERSIBILITE % de matières en suspension après 30 min | POUVOIR MOUSSANT Volume de mousse en ml au temps 0 |
|---|---|---|---|---|
| 21 | Phosphate de butyle (sel de triéthanolamine) | 68 | 55 | 10 |
| 22 | Phosphate d'éthyl-2 hexyle (sel de triéthanolamine) | 17 | 83 | 50 |
| 23 | Phosphate de tridécyle (sel de triéthanolamine) | 62 | 22 | 340 |
| 24 | Phosphate d'octadécyle (sel de triéthanolamine) | > 300 | 24 | 680 |
| 25 | Butylsulfate de sodium | > 300 | 22,5 | 70 |
| 26 | Ethyl-2 hexylsulfate de sodium | 42 | 18,6 | 320 |
| 27 | Dodécylsulfate de sodium | 64 | 24,6 | 740 |
| 28 | Condensat d'octylphénol avec 8 moles d'oxyde d'éthylène | 60 | 44,8 | 350 |
| 29 | Condensat d'octylphénol avec 5 moles d'oxyde d'éthylène | 62 | 45 | 380 |

- 16 -

0077233

Revendications de brevet

1. Poudres mouillables de substances solides hydrophobes, caractérisées en ce qu'elles contiennent, en mélange avec une ou plusieurs substances solides hydrophobes,

a) au moins un agent dispersant choisi parmi les lignosulfonates et les condensats du type acide naphtalènesulfonique-formaldéhyde, et

b) au moins un agent tensio-actif choisi parmi les esters phosphoriques salifiés ou non, d'un alcool aliphatique en $C_2$ à $C_{10}$ ramifié ou non, la quantité totale d'agent(s) dispersant(s) et d'agent(s) tensio-actif(s) étant comprise entre 1 et 6 parties en poids pour 100 parties en poids de substances solides hydrophobes et la proportion d'agent(s) dispersant(s) dans cette quantité totale pouvant aller de 35 à 85 % en poids.

2. Poudres mouillables selon la revendication 1 dans lesquelles l'agent dispersant est un condensat du type acide naphtalènesulfonique-formaldéhyde obtenu en sulfonant le naphtalène à une température comprise entre 130 et 165°C avec un excès moléculaire de 20 à 30 % d'agent sulfonant, puis en condensant le produit sulfoné avec le formaldéhyde à raison de 0,55 à 0,90 mole, de préférence 0,65 à 0,70 mole, de formaldéhyde par mole de naphtalène engagé et enfin en salifiant les groupements sulfoniques du condensat.

3. Poudres mouillables selon la revendication 1 ou 2, dans lesquelles l'agent tensio-actif est un dérivé d'éthyl-2 hexanol.

4. Poudres mouillables selon l'une des revendications 1 à 3, dans lesquelles l'agent dispersant est un condensat du type acide naphtalènesulfonique-formaldéhyde dont la proportion par rapport au poids total d'agents dispersants et tensio-actifs
est comprise entre 50 et 75 %.

5. Procédé pour la préparation de poudres mouillables de substances solides hydrophobes, caractérisé en ce que, dans 100 parties en poids d'une poudre finement divisée d'une ou plusieurs
substances solides hydrophobes, on incorpore au total 1 à 6 parties en poids de :

a) au moins un agent dispersant choisi parmi les lignosulfonates
   et les condensats du type acide naphtalènesulfonique-formaldéhyde, et

b) au moins un agent tensio-actif choisi parmi les esters phosphoriques, salifiés ou non, d'un alcool aliphatique en $C_2$ à
   $C_{10}$ ramifié ou non, lesdits agents dispersants et tensio-
   actifs étant ajoutés séparément ou préalablement mélangés à
   l'état de poudres ou de solutions, la proportion d'agent(s)
   dispersant(s) par rapport au poids total des agents dispersants et tensio-actifs pouvant aller de 35 à 85 %.

6. Adjuvants mouillants-dispersants et non moussants, utilisables
pour la préparation de poudres mouillables de substances solides
hydrophobes, caractérisés en ce qu'ils contiennent sous forme de
poudre ou de solution :

a) au moins un agent dispersant choisi parmi les lignosulfonates
   et les condensats du type acide naphtalènesulfonique-formaldéhyde, et

b) au moins un agent tensio-actif choisi parmi les esters phosphoriques, salifiés ou non, d'un alcool aliphatique en $C_2$ à
   $C_{10}$ ramifié ou non, la proportion d'agent(s) dispersant(s)
   par rapport au poids total des agents dispersants et tensio-
   actifs pouvant aller de 35 à 85 %.

- 19 -

7. Adjuvants selon la revendication 6, dans lesquels l'agent dispersant est un condensat tel que défini dans la revendication 2.

8. Adjuvants selon la revendication 6 ou 7, dans lesquels l'agent tensio-actif est un dérivé d'éthyl-2 hexanol.

9. Adjuvants selon l'une des revendications 6 à 8, dans lesquels l'agent dispersant est un condensat du type acide naphtalènesulfonique-formaldéhyde dont la proportion par rapport au poids total des agents dispersants et tensio-actifs est compris entre 50 et 75 %.

10. Adjuvants selon l'une des revendications 6 à 9, dans lesquels l'agent dispersant est un condensat du type acide naphtalènesulfonique-formaldéhyde exempt de sulfate.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 01 F   17/00 |
| A | FR-A-1 089 731   (DEHYDAG)  *Résumé  1;  page  1,  colonne  1, alinéa  1  -  page  2, colonne  1, alinéa 2* | 1,3,5, 6,7,8 | C 09 B   67/00  A 01 N   25/14 |
| | --- | | |
| A | US-A-3 963 432   (F.HAUXWELL)  *Revendications 1,6,7* | 1,5,6, 7,9 | |
| | --- | | |
| A | FR-A-2 028 095   (FISONS LTD) *Revendications  1,5-14;  page 3, lignes 14-23* | 1 | |
| | --- | | |
| A | FR-A-1 577 353   (R.T.VAN DER BILT)  *Résumé A, 1-3,6-8,B,C* | 1,5,6, 7,9 | **DOMAINES TECHNIQUES RECHERCHES (Int. Cl. ³)** |
| | --- | | |
| A | FR-A-2 122 710   (UGINE KUHLMANN) *Revendication  1;  page 1, ligne 31 - page 2, ligne 23* | 2 | B 01 F  C 09 B  A 01 N |
| | ----- | | |

Le présent rapport de recherche a été établi pour toutes les revendications

| Lieu de la recherche  LA HAYE | Date d'achèvement de la recherche  12-01-1983 | Examinateur  ROTSAERT L.D.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82